# DEMANDE DE BREVET EUROPEEN

(11) **EP 1 880 916 A2**
(43) Date de publication de la demande: **23.01.2008**
(21) Numéro de dépôt: 07112595.9
(22) Date de dépôt: 17.07.2007
(51) Int. Cl.: B62B 9/20, B62B 7/08

(54) **Poussette à commande de pliage au guidon**

(30) Priorité: 17.07.2006 FR 0606488
(71) Demandeur: DOREL FRANCE SA, 49309 Cholet Cedex (FR)
(72) Inventeur: Ageneau, Laurent, 85290 Saint Laurent sur Sèvre (FR)
(74) Mandataire: Guéné, Patrick Lucien Juan Joseph

(57) **Abrégé**

L'invention concerne une poussette pliante pour enfant comprenant un guidon monté articulé sur un châssis, dont le guidon peut prendre au moins deux positions : une première position de conduite, et une deuxième position de déverrouillage, actionnant au moins un élément de déverrouillage dudit châssis de façon à permettre son pliage.

## Description

### 1. Domaine de l'invention

Le domaine de l'invention est celui de la puériculture. Plus précisément, l'invention concerne les poussettes pour enfant.

### 2. Solutions de l'art antérieur

Les poussettes pour enfants comportent généralement des bras poussoirs leur permettant d'être poussées par un adulte. L'extrémité supérieure de ces bras poussoirs peut être constituée, selon les modèles de poussette, par des poignées ou par un guidon reliant les bras poussoirs. La présente invention porte plus particulièrement sur les poussettes comportant un guidon reliant les bras poussoirs.

Pour améliorer le confort de l'utilisateur, la hauteur du guidon des poussettes est parfois réglable en hauteur. Ce réglage peut par exemple se faire, dans le cas de guidons ayant une forme en U, en modifiant l'angle formé par le guidon et les bras poussoirs. Le guidon peut ainsi prendre plusieurs positions d'utilisation.

Il est souvent utile pour l'utilisateur d'une poussette que les commandes de déverrouillage de la structure de la poussette, pour permettre son pliage, soient accessibles quand l'utilisateur est en position de conduite de la poussette. Ces commandes sont donc couramment installées sur les poignées ou le guidon de la poussette, ou à proximité de celles-ci. De façon habituelle, les commandes de déverrouillage sont doubles, afin d'éviter un déverrouillage intempestif de la poussette. Il s'agit en général de deux boutons qui doivent être actionnés successivement par l'utilisateur, d'une seule main, ou de deux boutons devant être actionnés simultanément.

Le document EP0989043 présente un exemple de poussette comportant un guidon dont la position angulaire est réglable, et portant les commandes de déverrouillage de la poussette.

### Inconvénients de l'art antérieur

Une telle poussette à guidon inclinable avec une commande de déverrouillage au guidon comporte certains inconvénients compliquant sa fabrication et son utilisation.

Une telle commande de déverrouillage est assez difficile à actionner pour l'utilisateur. En effet, pour des raisons de sécurité, le déverrouillage ne peut pas être actionné par un bouton unique. Il est donc nécessaire d'avoir un ensemble de deux boutons, qui doivent être actionné d'une seule main.

Par ailleurs, un tel mécanisme de pliage s'adapte à une poussette à pliage « à plat », mais il est plus difficile à mettre en oeuvre sur une poussette à pliage en trois dimensions. En effet, le guidon d'une telle poussette doit pouvoir être pliant, et il est peu aisé de mettre en oeuvre sur un guidon pliant une commande double de pliage.

Enfin, une telle poussette devient donc difficile à manipuler par un utilisateur non averti. En effet, elle présente un grand nombre de commandes différentes, pour commander l'inclinaison du guidon, le pliage et, selon les cas, le verrouillage des roues directionnelles ou la fixation des assises ou des accessoires... L'utilisation de telles poussettes n'est donc pas évidente pour l'utilisateur.

### 3. Objectifs de l'invention

L'invention a notamment pour objectif de pallier ces inconvénients de l'art antérieur.

Plus précisément, un objectif de l'invention est de fournir une poussette comportant un mécanisme de pliage particulièrement fiable, et qui, en particulier, ne présente pas de risque de pliage intempestif ou involontaire

Un autre objectif de l'invention est de fournir une telle poussette qui soit particulièrement facile à plier et à déplier par l'utilisateur, même peu habitué à son utilisation.

L'invention a également pour objectif de fournir un telle poussette qui, en position pliée, soit particulièrement compacte.

### 4. Exposé de l'invention

Ces objectifs, ainsi que d'autres qui apparaîtront par la suite, sont atteints à l'aide d'une poussette pliante pour enfant comprenant un guidon monté articulé sur un châssis, dont, selon l'invention, le guidon peut prendre au moins deux positions :
- une première position de conduite ;
- une deuxième position de déverrouillage, dans laquelle ledit guidon actionne au moins un élément de déverrouillage dudit châssis de façon à permettre son pliage.

Une telle poussette est fiable, facile d'utilisation et comporte moins de commandes, ce qui lui permet d'être plus simple pour l'utilisateur.

Selon un mode de réalisation avantageux, le guidon est mobile en rotation par rapport au châssis.

Préférentiellement, le guidon est déplaçable sur une zone angulaire décomposée en au moins trois plages :
- une plage de réglage de position de conduite comprenant au moins deux positions de conduite prédéterminées ;
- une plage de déverrouillage dans laquelle le guidon actionne le ou les éléments de déverrouillage ;
- une plage intermédiaire de sécurité dans laquelle le guidon n'est pas maintenu dans une position de conduite et n'agit pas sur le ou les éléments de déverrouillage.

Il est ainsi possible de combiner un guidon à position réglable et un déverrouillage par le guidon. De plus, la plage intermédiaire permet d'éviter que l'utilisateur ne déverrouille la poussette accidentellement, en voulant régler la hauteur du guidon.

Selon un mode de réalisation préférentiel, la plage intermédiaire est décomposée en deux sous-plages :
- une sous-plage voisine de la plage de réglage, dans laquelle le déplacement du guidon est libre ;
- une sous-plage voisine de la plage de déverrouillage, dans laquelle des moyens de rappel agissent sur le guidon de façon à l'éloigner de la zone de déverrouillage.

Le risque d'un déverrouillage intempestif est ainsi encore réduit.

Selon un mode de réalisation avantageux de l'invention, dans la zone de déverrouillage, le guidon agit sur au moins un câble relié à au moins un des éléments de déverrouillage.

Préférentiellement, le guidon agit sur le câble par l'intermédiaire d'une bielle d'embarquement de câble qui est entraînée en rotation par le guidon dans la zone de déverrouillage.

Le déverrouillage est ainsi contrôlé de façon très fiable.

Selon un mode de réalisation préférentiel de l'invention, l'articulation coopère avec un bouton de contrôle permettant le blocage en rotation du guidon dans certaines positions prédéterminées.

Avantageusement, le blocage en rotation du guidon n'est possible que quand celui-ci se trouve dans la plage de réglage de position de conduite.

Préférentiellement, l'élément de déverrouillage du châssis permet un amorçage du pliage du châssis, une action complémentaire sur au moins un autre élément de déverrouillage étant nécessaire pour obtenir le pliage complet.

Ce mode de déverrouillage en deux temps permet de répondre aux exigences des normes en vigueur.

Avantageusement, l'élément de déverrouillage du châssis produit un signal sonore quand il passe en position déverrouillée.

Ce signal permet à l'utilisateur d'être informé que le châssis de la poussette est déverrouillé.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 représente une poussette selon un mode de réalisation de l'invention, dont le guidon est dans une position d'utilisation ;
- la figure 2 représente la poussette de la figure 1, dont le guidon est dans une autre position d'utilisation ;
- la figure 3 représente la poussette de la figure 1, dont le guidon est dans une position garde de déverrouillage ;
- la figure 4 représente la poussette de la figure 1, dont le guidon est dans une position de déverrouillage du châssis ;
- la figure 5 représente la poussette de la figure 1,en position pliée ;
- la figure 6 représente le guidon de la poussette de la figure 1 ;
- la figure 7 représente le guidon de la poussette de la figure 1, dans différentes positions ;
- la figure 8 est une vue éclatée du mécanisme de verrouillage de guidon de la poussette de la figure 1 ;
- la figure 9 est une autre vue éclatée du mécanisme de verrouillage de guidon de la poussette de la figure 1 ;
- la figure 10 est une vue en coupe schématique du mécanisme de déverrouillage de la poussette de la figure 1.

### 6. Description détaillée de l'invention

### 6.1 Rappel du principe de l'invention

Le principe général de l'invention repose sur le guidon articulé de la poussette qui peut, d'une part, se verrouiller dans plusieurs positions d'utilisation et, d'autre part, être amené dans une position dans laquelle il provoque le déverrouillage de la structure de la poussette.

### 6.2 Poussette à guidon pliable en 3 dimensions.

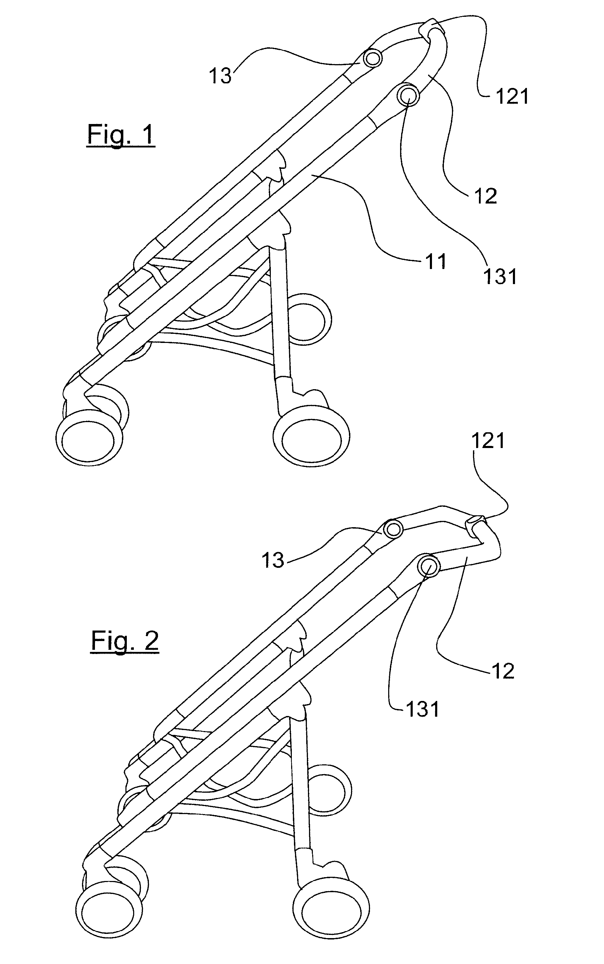

La figure 1 représente une poussette selon un mode de réalisation de l'invention. Cette poussette comprend notamment deux bras poussoirs 11 à l'extrémité supérieure desquels se trouve un guidon 12. La poussette est conçue pour être pliable selon trois dimensions, de façon à ce que ses bras poussoirs, quand elle et pliée, soient rapprochés l'un de l'autre.

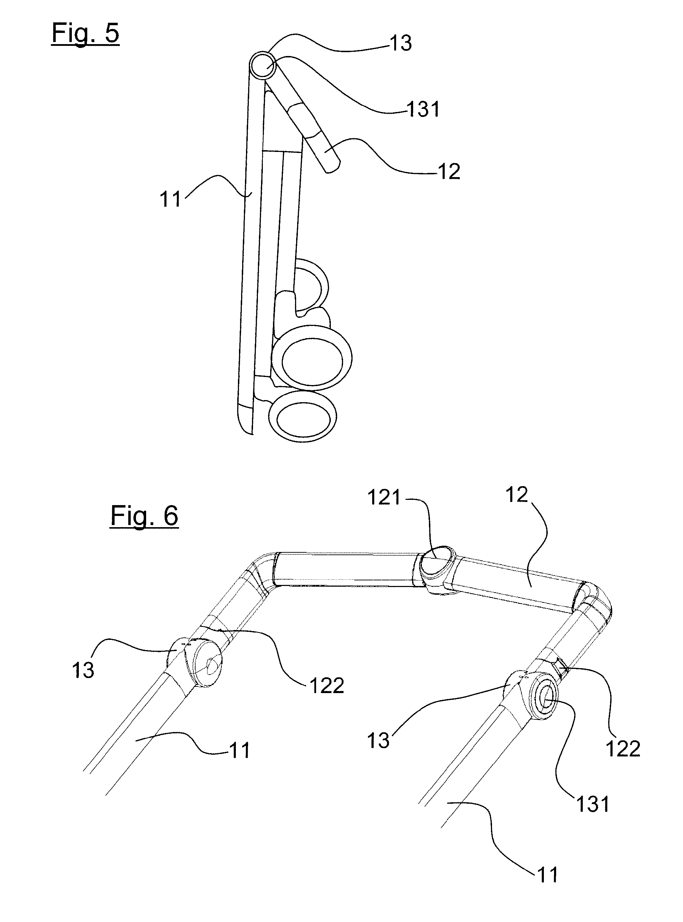

La poussette est représentée en position pliée sur la figure 5. Dans cette position, le guidon est déformé par rapport à sa position d'utilisation, de façon à permettre aux parties droite et gauche de la poussette de se rapprocher l'une de l'autre.

Le guidon 12 est représenté plus en détail sur la figure 6. Il est articulé, et comporte une articulation centrale 121 et deux articulations latérales 122. Il est également possible de modifier l'angle que forme le guidon 12 avec les montants 11, lorsque la poussette est déployée, par rotation autour de deux noix de réglage 13, situées à la jonction des bras poussoirs 11 et du guidon 12.

### 6.3 Réglage en hauteur du guidon

Chacune des noix de réglage 13 comporte un bouton de commande 131 de déverrouillage du guidon. Lors de l'utilisation de la poussette, la position du guidon par rapport aux bras poussoir est verrouillée par un mécanisme de verrouillage compris dans les noix de réglage 13. Cependant, une pression de l'utilisateur sur les deux boutons de commande de déverrouillage 131 permet de déverrouiller cette position, ce qui permet à l'utilisateur de modifier la hauteur du guidon. Quand l'utilisateur a amené le guidon dans une position de réglage qui lui convient, il relâche les boutons de commande de déverrouillage 131, et la position du guidon se verrouille.

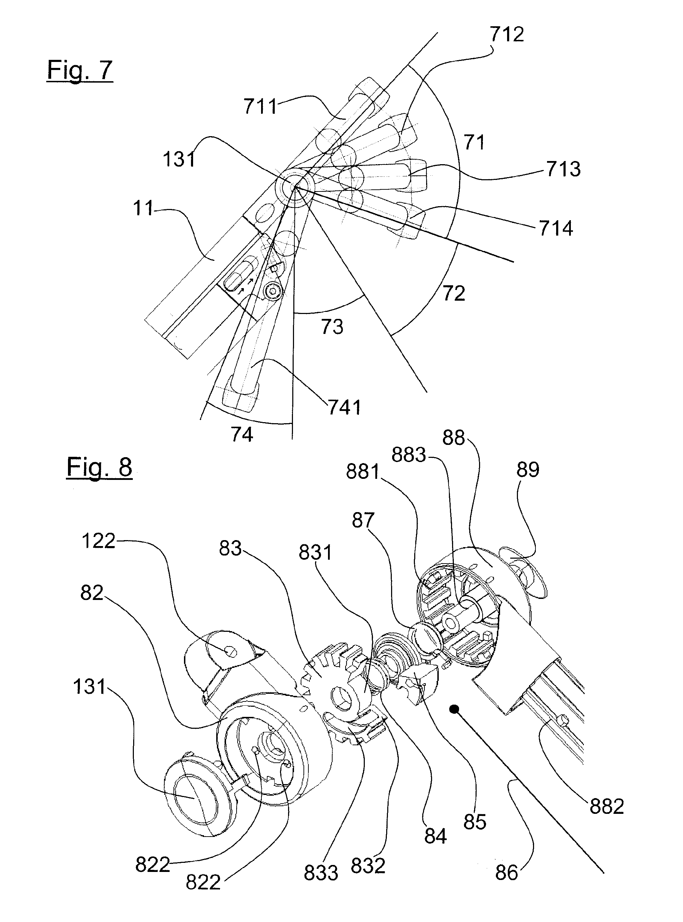

Les figures 1 et 2 représentent ainsi deux positions d'utilisation possible du guidon 12 de la poussette. La poussette représentée permet quatre positions d'utilisation du guidon, qui sont représentées sous les numéros 711, 712, 713 et 714 sur la figure 7. Ces quatre positions sont inclues dans une plage angulaire de conduite 71, qui va de la position dans laquelle le guidon est dans le prolongement des bras poussoir 11 (position 711, représentée par la figure 1) à une position 714 dans laquelle le guidon est plus bas que la position horizontale.

### 6.4 Principe du pliage par le guidon

Quand l'utilisateur presse les deux boutons de commande de déverrouillage 131 pour déverrouiller la position du guidon et abaisse le guidon en dessous de la position 714, le guidon sort de la plage angulaire de conduite 71. En dehors de cette plage angulaire 71, sa position ne peut pas être verrouillée, même si l'utilisateur relâche les boutons de commande de déverrouillage 131.

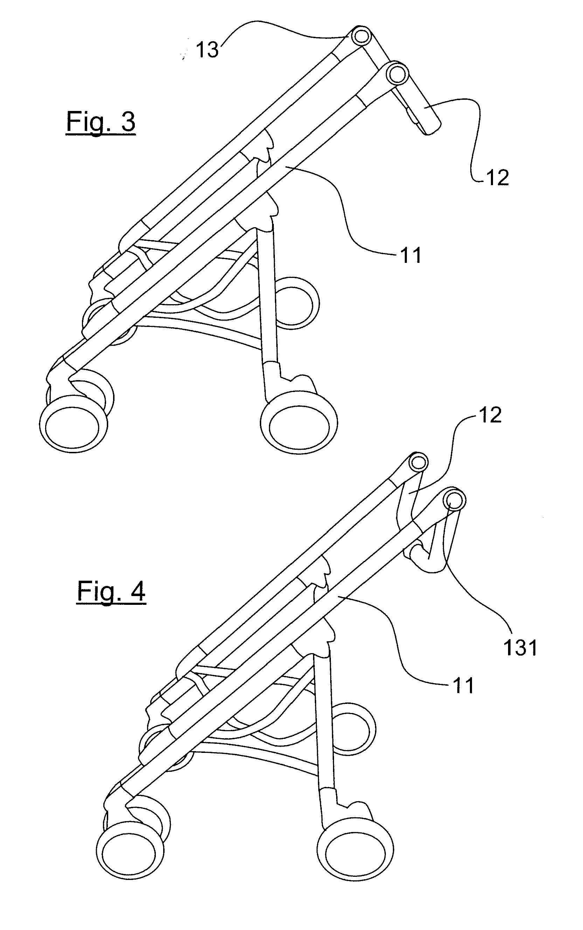

Quand le guidon est situé dans la plage angulaire libre 72, son mouvement est libre. Le guidon, s'il est lâché dans cette plage angulaire, retombera donc sous l'effet de la gravité dans la position de garde de déverrouillage, représentée par la figure 3. Le guidon, dans cette position de garde de déverrouillage, est à la limite de la plage angulaire libre 72 et de la plage angulaire de garde de déverrouillage 73.

Dans la plage angulaire de garde de déverrouillage 73, un ressort de rappel 87 agit sur le guidon 12 et tend à le ramener en position de garde de déverrouillage. Enfin, quand l'utilisateur pousse le guidon 12 de la poussette jusqu'à la plage angulaire de déverrouillage du châssis 74, comme le représente la figure 4, il actionne une commande qui déverrouille le châssis de la poussette et permet son pliage.

Une fois que le châssis de la poussette est déverrouillé, le ressort de rappel du guidon 87 ramène le guidon 12 dans sa position de garde de déverrouillage. Ainsi, pendant la phase de pliage du châssis, le guidon ne gène pas le pliage, quelle que soit la position d'installation du hamac fixé sur le châssis, face route ou dos à la route, et quelle que soit la position d'inclinaison de ce hamac.

La poussette représentée sur la figure 5 ainsi que le guidon 741 de la figure 7 correspondent ainsi à la position pliée de la poussette.

### 6.5 Fonctionnement de la noix pour le réglage du guidon

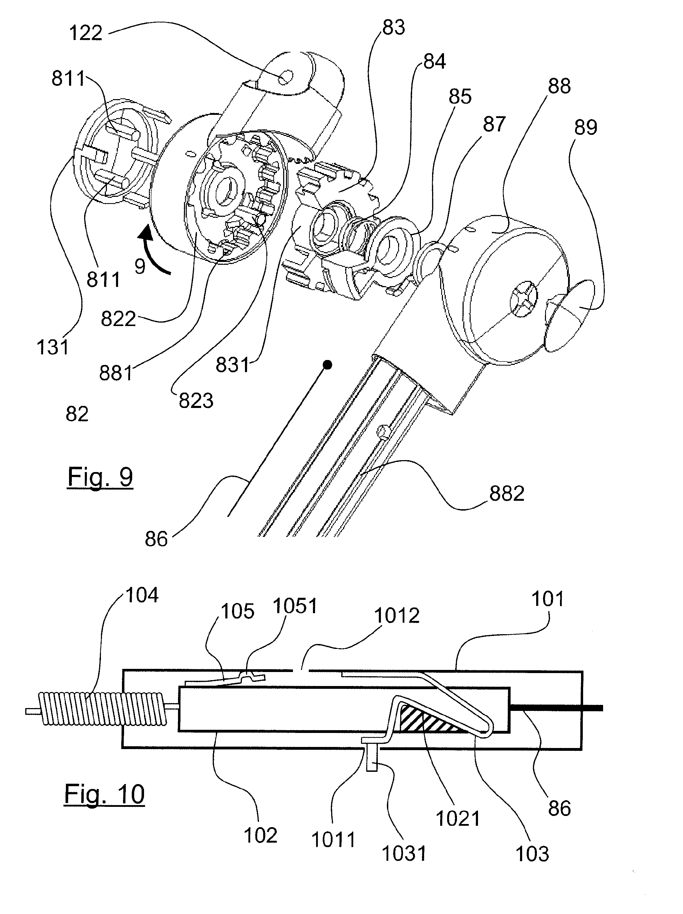

La noix de réglage 13 comporte donc les éléments permettant à la fois le réglage en hauteur du guidon et le déverrouillage du châssis de la poussette. Les éléments constituant l'une de ces noix sont représentés en éclaté sur les figures 8 et 9. La noix est composée d'une demi-noix 82 liée au guidon et d'une demi-noix 88 liée au poussoir. La demi-noix 82 porte le bouton de commande de déverrouillage 131 et la demi-noix 88 porte un accroche panier 89. Entre les deux demi-noix se trouvent une roue dentée 83, un ressort de rappel du bouton 84, une bielle d'embarquement de câble 85, à laquelle est liée le câble de déverrouillage du châssis 86, et un ressort de rappel du guidon 87.

La demi-noix 82, la roue dentée 83, le ressort de rappel 84, la bielle 85, et le ressort de rappel 87 sont montés pivotants sur un arbre 883 qui est lié à la demi-noix 88.

Avantageusement, comme le représente la figure 8, l'arbre 883 comporte un épaulement 884. Le diamètre intérieur du ressort de rappel du guidon 87 et celui de la bielle 85 correspondent au plus grand diamètre de l'arbre 883. En revanche, une rondelle (non représentée) de diamètre intérieur adapté au plus petit diamètre de l'arbre 883 vient en appui sur cet épaulement de l'arbre 883. Le ressort de rappel du bouton 84 est monté en appui sur cette rondelle.

Ainsi, il n'y a aucun contact entre le ressort de rappel du bouton 84 et la bielle 85. La rotation de cette dernière n'est donc pas gênée par le contact avec le ressort 84.

La demi-noix 82 est liée au guidon par l'intermédiaire de l'articulation latérale 122. Elle comporte sur sa face intérieure des dentures 821 complémentaires de celles de la roue dentée 83.

La demi-noix est liée au bras poussoir 11 par l'intermédiaire du coulisseau 881, qui s'insère dans le tube formant le bras poussoir. Elle comporte également sur sa face intérieure des dentures 881 complémentaires de celles de la roue dentée 83.

Quand le guidon est en position d'utilisation, et en l'absence d'action de l'utilisateur sur le bouton 131, la roue dentée 83 est en prise en même temps avec les dentures correspondantes de l'intérieur des demi-noix 82 et 88. Ainsi, cette roue dentée empêche toute rotation de l'une des demi-noix par rapport à l'autre.

Le bouton 131 peut coulisser dans la demi-noix 82. Il comporte des tiges d'appui 811 qui peuvent coulisser dans des trous correspondants 824 de la demi-noix 82. Ces tiges d'appui 811, quand le bouton 81 est actionné, décalent la roue dentée 83, en comprimant le ressort de rappel du bouton 84, jusqu'à ce que la roue dentée 83 ne soit plus en prise avec les dentures 821 de la demi-noix 82. A ce moment, la demi noix 82 est libres de tourner par rapport à la demi noix 88 et à la roue dentée

La demi-noix 82 porte un doigt 823 qui, dans les positions d'utilisation de la poussette, est logé dans la rainure 833 de la roue dentée 83. L'action de ce doigt 833 sur la roue denté empêche la rotation de la demi-noix 82 au delà de la position représentée par la figure 1, dans un autre sens que celui représenté par la flèche 9 de la figure 9.

### 6.5 Fonctionnement de la noix pour le déverrouillage de la poussette

L'intérieur de la demi-noix 82 comporte une zone non dentée 822. Tant que le guidon 12 se trouve dans une position correspondant à la plage angulaire de conduite 71, cette zone non dentée est en face d'une zone vide 831 de la roue dentée 83. la présence de cette zone non dentée 822 et de cette zone vide 831 n'empêche donc pas la roue dentée 83 de revenir en prise avec la demi-noix 82 quand l'utilisateur relâche le bouton 131. La position du guidon peut donc se verrouiller dans ces positions.

Quand le guidon est dans une autre zone angulaire, dans laquelle sa position est en dessous de la position d'utilisation la plus basse 714, cette zone non dentée se trouve en face des dents de la roue dentée 83. La roue dentée ne peut alors plus revenir en prise avec la demi-noix 82, même si l'utilisateur relâche le bouton 131. Il est donc impossible de verrouiller la position du guidon 12 dans ces zones angulaires.

La bielle d'embarquement du câble comporte une tête 851 qui se place dans la zone vide 831 de la roue dentée 83 cette tête 851 est maintenue par le ressort de rappel 87, qui agit en torsion, contre la paroi 832 de la zone vide 831.

Quand le guidon 12 de la poussette, en tournant comme l'indique la flèche 9, arrive en position de garde de déverrouillage, représentée par la figure 3, c'est à dire à la limite entre les zones angulaires 72 et 73, le doigt 823 de la demi noix 82 arrive à l'extrémité de la rainure 833 et vient en contact avec la tête 851 de la bielle 85.

A ce moment, si l'utilisateur veut poursuivre le mouvement de rotation du guidon dans le sens indiqué par la flèche 9, il doit agir contre l'effort du ressort 87, pour faire pivoter la bielle 85 dans l'espace vide 831 de la roue dentée 83.

Le début de la rotation de la bielle 85, quand le guidon est dans la zone angulaire de garde de déverrouillage, entraîne une faible traction du câble de déverrouillage 86, qui lui est lié. Cette faible traction permet de tendre le câble qui, dans les positions d'utilisation de la poussette, est détendu.

Par contre, quand la rotation de la bielle 85 se poursuit et que le guidon est poussé par l'utilisateur jusqu'à la plage angulaire de déverrouillage du châssis 74, comme le représente la figure 4, le câble 86 est tiré par la bielle 85 suffisamment pour entraîner le déverrouillage du châssis de la poussette.

Un mode de réalisation possible du mécanisme de déverrouillage est représenté de façon schématique sur par la figure 10. On peut voir sur cette figure un support fixe 101 qui est situé à l'intérieur du tube formant le bras poussoir 11, et qui est fixé à ce tube. Une lame ressort 103 est fixée, par l'une de ses extrémités, au support fixe 101. A son autre extrémité, elle porte un pion de verrouillage 1031. Ce pion de verrouillage, en position verrouillé de la poussette, sort partiellement du support fixe par l'ouverture 1011 pour assurer la solidarisation du bras poussoir 11 avec les brancards avant de la poussette.

Une navette 102 est montée coulissante dans le support fixe 101. Elle est maintenue, par l'une de ses extrémités, par un ressort 104 qui est fixé au tube formant le bras poussoir 11, et par l'autre de ses extrémités au câble 86. Le coulissement de cette navette 102 est donc contrôlé par les commandes de déverrouillage. La navette 102 comporte une pente permettant d'agir sur la lame ressort 103. Ainsi, lorsqu'une traction est exercée sur le câble 86, la navette 102 se déplace vers la droite et la pente déforme la lame ressort 103 jusqu'à ce que le pion 1031 s'escamote complètement dans le support fixe 101.

Une seconde lame ressort 105 est fixée, par l'une de ses extrémités, sur la navette 102. Elle porte à son autre extrémité un bouton 1051, qui est maintenu contre la paroi du support fixe 101. Quand la navette 102 est suffisamment décalée pour que le déverrouillage de la poussette soit effectif, le bouton 1051 pénètre dans l'ouverture 1012 du support fixe, en faisant un léger bruit (« clic »). Ce « clic »permet retourner à l'utilisateur l'information que le déverrouillage du châssis est effectif.

Après le déverrouillage du châssis, le ressort 87 tend à redresser le guidon. Un système de maintien, qui peut être interne ou externe aux noix de réglage 13, permet de maintenir le guidon dans la position de pliage représentée par la figure 5, dans laquelle le guidon est incliné au maximum par rapport au bras poussoir. Cette position permet une meilleure compacité de la poussette pliée.

### 6.6 Autres caractéristiques et avantages

La noix 13 est fermée par une vis non représentée qui passe à l'intérieur de l'arbre 883 et vient se visser dans l'accroche panier 9, qui comporte un écrou. La tête de la vis est cachée sous le bouton de commande 131.

Le déverrouillage de la structure de la poussette suite à une action sur le guidon peut permettre le pliage total de la poussette. Selon un autre mode de réalisation, ce déverrouillage ne permet qu'un un amorçage du pliage, qui doit être poursuivi en actionnant un autre moyen de déverrouillage. Un tel mode de pliage est décrit par la demande de brevet FR0307581, au nom de la demanderesse.

## Revendications

1. Poussette pliante pour enfant comprenant un guidon monté articulé sur un châssis, **caractérisée en ce que** ledit guidon peut prendre au moins deux positions :
- au moins une première position de conduite ;
- une deuxième position de déverrouillage, dans laquelle ledit guidon actionne au moins un élément de déverrouillage dudit châssis de façon à permettre son pliage.

2. Poussette selon la revendication 1, **caractérisée en ce que** ledit guidon est mobile en rotation par rapport audit châssis.

3. Poussette selon l'une quelconque des revendications 1 et 2, **caractérisée en ce que** ledit guidon est déplaçable sur une zone angulaire décomposée en au moins trois plages :
- une plage de réglage de position de conduite comprenant au moins deux positions de conduite prédéterminées ;
- une plage de déverrouillage dans laquelle ledit guidon actionne le ou lesdits éléments de déverrouillage ;
- une plage intermédiaire de sécurité dans laquelle ledit guidon n'est pas maintenu dans une position de conduite et n'agit pas sur le ou lesdits éléments de déverrouillage.

4. Poussette selon la revendication 3 **caractérisée en ce que** ladite plage intermédiaire est décomposée en deux sous-plages :
- une sous-plage voisine de ladite plage de réglage, dans laquelle le déplacement dudit guidon est libre ;
- une sous-plage voisine de ladite plage de déverrouillage, dans laquelle des moyens de rappel agissent sur ledit guidon de façon à l'éloigner de ladite zone de déverrouillage.

5. Poussette selon l'une quelconque des revendications 3 et 4 **caractérisée en ce que**, dans ladite zone de déverrouillage, ledit guidon agit sur au moins un câble relié à au moins un desdits éléments de déverrouillage.

6. Poussette selon la revendication 5 **caractérisée en ce que** ledit guidon agit sur ledit câble par l'intermédiaire d'une bielle d'embarquement de câble qui est entraînée en rotation par ledit guidon dans ladite zone de déverrouillage.

7. Poussette selon l'une quelconque des revendications 1 à 6 **caractérisée en ce que** ladite articulation coopère avec un bouton de contrôle permettant le blocage en rotation dudit guidon dans certaines positions prédéterminées.

8. Poussette selon les revendications 3 et 6 **caractérisée en ce que** le blocage en rotation dudit guidon n'est possible que quand celui-ci se trouve dans ladite plage de réglage de position de conduite.

9. Poussette selon l'une quelconque des revendications 1 à 7 **caractérisée en ce que** ledit élément de déverrouillage dudit châssis permet un amorçage du pliage dudit châssis, une action complémentaire sur au moins un autre élément de déverrouillage étant nécessaire pour obtenir le pliage complet.

10. Poussette selon l'une quelconque des revendications 1 à 9 **caractérisée en ce que** ledit élément de déverrouillage dudit châssis produit un signal sonore quand il passe en position déverrouillée.
